# EUROPEAN PATENT APPLICATION

(11) **EP 3 006 356 A1**
(43) Date of publication of application: **13.04.2016**
(21) Application number: 14425129.5
(22) Date of filing: 09.10.2014
(51) Int. Cl.: B65B 43/52, B65G 15/52, B65G 17/06, B65B 59/00, B65B 59/04, B65G 17/12, B65G 17/34, B65G 17/42, B65G 19/24, B65G 15/60, B65G 21/22, A01D 17/10, B65B 7/16

(54) **Highly sanitable versatile container conveyor equipment**

(71) Applicant: Mondini, Nazzareno, 25033 Cologne Bresciano (IT)
(72) Inventor: Mondini, Nazzareno, 25033 Cologne Bresciano (IT)

(57) **Abstract**

Highly sanitisable, versatile container conveyor equipment, based on a closed-ring belt system on which are mounted rod joints (2) shaped to be adapted to the transmission of motion to the thruster (3), resting on openly exposed guides (4), designed for speeding up the dismantling of belts, thus making it possible to rapidly obtain a high level of cleanliness and hygiene.

## Description

In the field of container sealing systems there are various methods for conveying the containers in and out of the sealing station. Sometimes the containers are conveyed into the heat sealing die by feeder systems that utilise belts or chains, and are then ejected from the heat sealing area in the same manner. When the heat sealer is fitted and in use, an intersection occurs between the sealing unit, consisting of the heat sealer and die, and the conveyor unit itself. This implies two problems. Since it is desirable to make provision for ease of dismantling, easily accessible components such as stainless steel chains or modular conveyor belts can be used. These components are easy to dismantle but are also the cause of serious contamination in the production unit and consequently, cleaning becomes extremely onerous and difficult.

The problem could be overcome by utilising feeder conveyors consisting of a belt that can be closed by means of hooks. In this way however, the closing hook itself becomes a source of contamination. Unfortunately this item is in itself a weak link in the structure and lowers the unit's weight-bearing capacity and working life span.

This solution does not entirely solve the problem of cleanliness and hygiene of the unit itself.

Belts with welded thrusters mainly have straight prongs which, by their nature, are not self-centring and therefore this requires the application of flanges on the drive and return pulleys, which then constitute additional dirt traps, as do the belt guides. Replacement of the belts implies a laborious mechanical dismantling operation that has to be carried out by specialised personnel, unless one opts for a segmented belt with joins that can be undone, which is a mechanically weak and inferior option in terms of cleanliness and sanitisation.

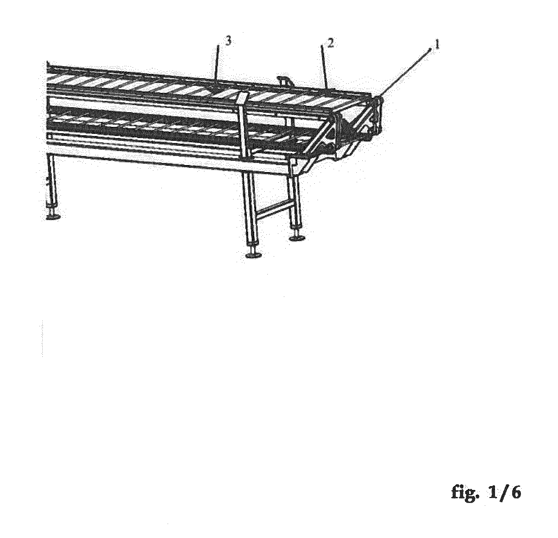

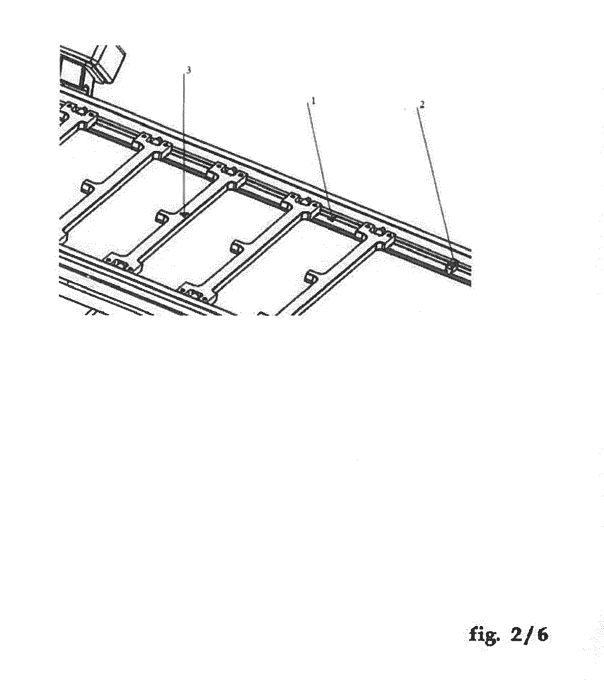

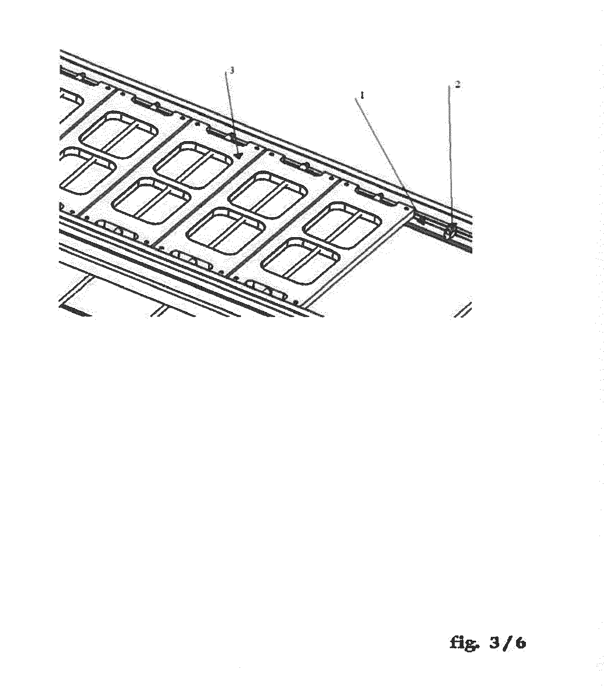

The purpose of this invention, which is designed preferably for use on production lines equipped for the packaging of foodstuffs or medical and pharmaceutical products, mainly involves the use of linked feeder conveyors with closed-loop belts (1) with self-centring teeth, or other drive devices equipped with variously shaped rods (2) suitable for easy attachment and easy removal of appropriately shaped thrusters specifically designed for different purpose (Fig. 1, Fig. 2, Fig. 3). The thrusters rest on a runner and containment guide (4) mounted at variable pitch and limited to at least two belts side by side and located at the ends of the thruster runner and containment guides, whether they be rods (3) or other conveying devices. The closed-loop drive system (1) can be used with at least two or more belts side by side. The thrusters can be laid out at different pitches depending on production requirements. The belts have the task of pulling variously shaped rods (2) while they are guided and supported in such a way as to minimise the surfaces that are not reachable by the most commonly used washing methods. In the case in point, the belt does not rest on any guides since the support and guiding function is left to the protruding parts of the rods (3), which rest on the runner guide (4), thereby reducing the contact surface to a minimum, with obvious advantages in terms of cleanliness and sanitisation. Mechanically speaking, the closed-loop belts (1) can be dismantled by merely de-tensioning them either manually or automatically and removing any machine parts or equipment that interfere with this operation and the belts can then be removed manually without the need for tools of any kind. The equipment is designed in such a way as to speed up the removal of components, even where tools are required.

The conveyor equipment is built in such a way that the conveyor component crosses paths with as few other components as possible and above all that it is in full view: it does not pass through any areas of the unit that are not washable and is therefore located in an area that is fully sanitisable.
Figure 1 shows one possible physical shape of the described components, using a simple rod as a thruster.
Figure 2 shows a shaped rod with pointers that enables the conveyance of containers of various shapes.
Figure 3 shows a thruster in the form of a shaped plate suitable for gathering containers.

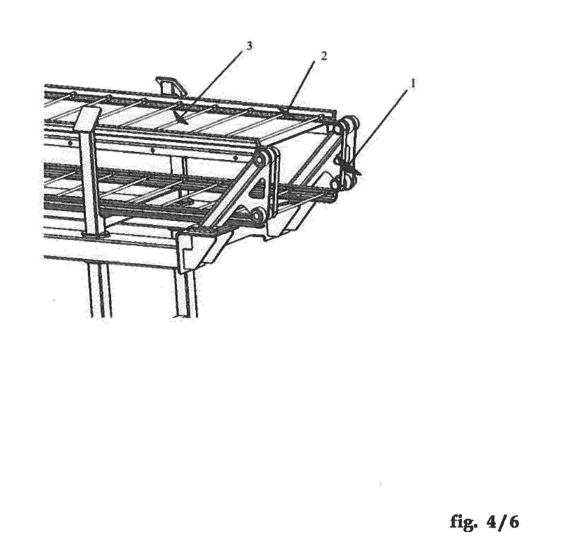

Figure 4 shows a potential application and setting with a pitch of x.

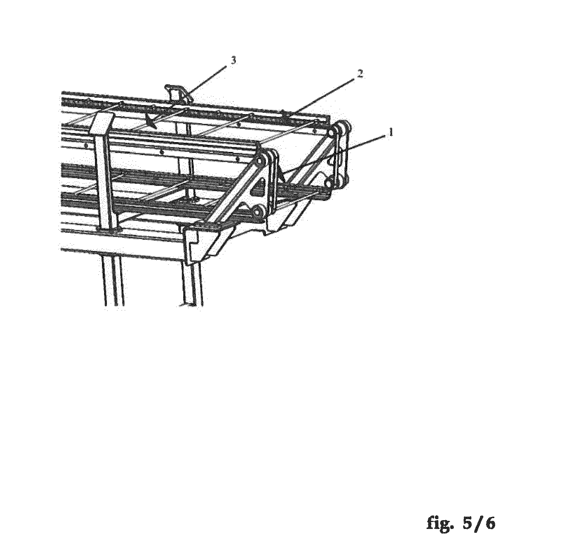

Figure 5 shows a potential application and setting with its double.

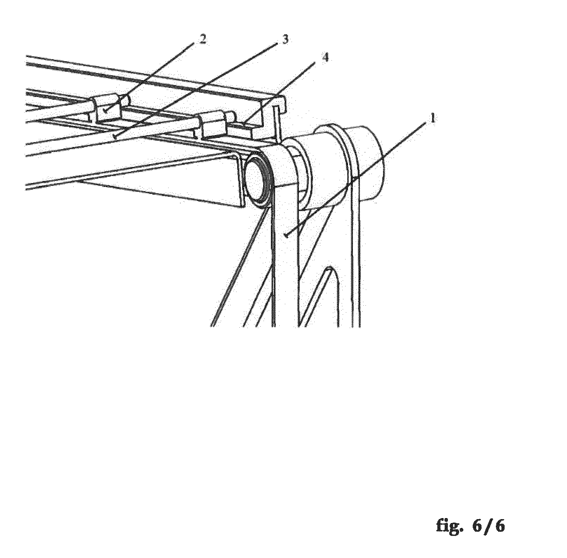

Figure 6 shows the following:
   1. closed-loop belt;
   2. differently shaped joining rod;
   3. rod-type thruster;
   4. thruster runner and containment guides.

## Claims

1. A versatile system equipped with continuous-loop belts (1) onto which are mounted permanent or removable joining lugs (2) shaped so as to effectively transmit the motion to various types of thrusters (3), resting on exposed guides (4) mounted with a specific pitch (Fig. 4) or a dual pitch (Fig 5), designed to enable the belts to be dismantled quickly without the use of any tools in order to ensure an extremely high level of cleanliness and hygiene within a short space of time.

2. In accordance with the first claim, a versatile apparatus equipped with continuous-loop belts (1) onto which are mounted permanent or removable joining lugs (2) shaped so as to effectively transmit the motion to various types of thrusters (3), resting on exposed guides (4) mounted at a specific pitch (Fig. 4) or dual pitch (Fig 5), designed to enable the belts to be dismantled quickly and designed to enable components to be dismantled using tools in order to disassemble the unit and guarantee cleanliness and hygiene.

3. In accordance with claims one and two above, a versatile system equipped with continuous-loop belts (1) onto which are mounted permanent or removable joining lugs (2) shaped so as to effectively transmit the motion to thrusters (3) represented by shaped plates (Fig. 3), resting on exposed guides (4) mounted with a specific pitch (Fig. 4) or a dual pitch (Fig 5), designed to enable the belts to be dismantled quickly with or without the use of any tools.

4. In accordance with claims one and two above, a versatile system equipped with continuous-loop belts (1) onto which are mounted permanent or removable joining lugs (2) shaped so as to effectively transmit the motion to thrusters (3) represented by rods with pointers (Fig. 2), resting on exposed guides (4) mounted with a specific pitch (Fig. 4) or a dual pitch (Fig 5), designed to enable the belts to be dismantled quickly with or without the use of any tools.
